# FASCICULE DE BREVET EUROPEEN

(11) **EP 0 927 874 B1**
(45) Date de publication et mention de la délivrance du brevet: **12.12.2001**
(21) Numéro de dépôt: 97403184.1
(22) Date de dépôt: 30.12.1997
(51) Int. Cl.: G01F 1/684, G01F 1/688, G01F 1/692

(54) **Procédé de réalisation de capteur à microthermocouple pour débitmètre massique et dispositif associe**
Verfahren zur Schaffung eines Mikro-Thermoelement-Sensors für die Massendurchflussmessung und entsprechende Vorrichtung dazu
Manufacturing method for microthermocouple sensor for a mass flow meter and associated device

(43) Date de publication de la demande: 07.07.1999
(73) Titulaire: Qualiflow S.A., 34935 Montpellier Cedex 9 (FR)
(72) Inventeur: Rudent, Pascal, 30 Rue Valadon, 34000 Montpellier (FR); Boyer, André, 34090 Montpellier (FR); Giani, Alain, 34920 Le Cres (FR)
(74) Mandataire: Ravina, Bernard

(56) Documents cités:
- EP-A- 0 131 318
- EP-A- 0 809 090
- DE-A- 3 220 170
- DE-A- 3 229 609
- DE-C- 19 520 777
- PATENT ABSTRACTS OF JAPAN vol. 008, no. 223 (P-307), 12 octobre 1984 -& JP 59 105522 A (HORIBA SEISAKUSHO:KK;OTHERS: 01), 18 juin 1984,
- BARRALIS & MADER: "Précis de métallurgie; élaboration, structures-propriétés et normalisation, pages 70 -72 ", 01. Mars 1983, AFNOR NATHAN,

## Description

La présente invention est du domaine des dispositifs de mesure de débit de fluides dans une canalisation.

Le thermocouple selon l'invention est destiné à être incorporé dans un débitmètre massique lequel est placé dans une chaîne de gestion et de contrôle de circulation de gaz de haute pureté par exemple.

Ces débitmètres massiques, comportent usuellement un tube capillaire de circulation du fluide, sur lequel les mesures représentatives du débit sont effectuées, disposé en parallèle avec le circuit principal de circulation du fluide.

De nombreux types de débitmètres massiques sont déjà connus de l'homme de l'art. Ils sont le plus souvent basés sur un chauffage local du fluide passant dans le tube capillaire, et une mesure de variation de résistance d'éléments résistifs en fonction de la température, ladite mesure étant représentative du flux de gaz dans le tube, et donc du débit. Les résistances de mesure sont le plus souvent simplement bobinées autour du tube capillaire isolé (US Patent 3 938 384).

Dans le brevet intitulé DIRECTION SENSITIVE FLOW-RATE INDICATOR (EP 0 313 120) Bronkhorst présente un dispositif d'indicateur de flux sensible au flux de gaz dans deux directions perpendiculaires par utilisation de deux thermocouples placés dans des directions orthogonales sur un substrat.

Dans une autre demande MASS FLOW METERS WITH TEMPERATURE SENSORS (EP 0 395 126 B1), Bronkhorst propose une géométrie de tube en U très allongé, et doté de séries de thermocouples placés symétriquement et d'une résistance chauffante centrale en deux parties, ainsi éventuellement que d'éléments de refroidissement Peltier, pour palier les problèmes d'erreur de mesure liée à une circulation d'air à l'extérieur du capteur ou de convection interne au tube capillaire.

De nombreux autres documents brevets ou articles dans des revues scientifiques concernent des thermocouples destinés à être intégrés dans des débitmètres massiques.

Le brevet japonais n° 59105522 divulgue un dispositif qui vise à obtenir une grande sensibilité de mesure en formant un film resistor sur un film d'isolation électrique réalisé sur la face plane d'un matériau capillaire en silicone cristallin à section rectangulaire formant un passage capillaire à l'intérieur.
Il n'y a pas utilisation d'un tube capillaire métallique pour le passage du gaz.

Le document BARRALIS et MAEDER «pièces de métallurgie : élaboration, structures, propriétés et normalisation», éditions Afnor Nathan, pages 70-72,
divulgue le principe du recuit des aciers de manière générale sans précision, ni même présomption d'une utilisation dans le secteur technique de l'invention.

Le brevet EP 0 809 090 décrit un débitmètre massique dans lequel un tube capillaire avec couche d'isolation électrique reçoit un capteur sous forme d'un film résistif de Nickel ou platine.

La présente invention propose un nouveau procédé de réalisation de thermocouple.

Selon un second but de l'invention, le procédé de réalisation du dispositif permet une fabrication de thermocouples de caractéristiques connues précisément et reproductibles.

L'objet de l'invention est un procédé de réalisation d'un capteur à microthermocouple destiné à être incorporé dans un débitmètre massique pour circuit de fluides gazeux, ledit capteur étant réalisé sur un tube capillaire métallique.
Le procédé se distingue en ce qu'il comporte les étapes suivantes :
- le dépôt d'une couche isolante électriquement sur le tube capillaire ;
- puis le dépôt sur ladite couche isolante des éléments actifs du thermocouple répartis en deux zones latérales en un même matériau entourant une zone centrale en un matériau de nature différente ;
- puis recuit du tube capillaire ;
- montage d'un élément chauffant sur le tube ainsi traité.

Suivant une autre disposition, le procédé se caractérise en ce que les zones latérales sont réalisées par dépôt de Bismuth et que la zone centrale est réalisée par dépôt d'Antimoine.

Le capteur à microthermocouple selon l'invention comprend :
- une couche isolante sur le tube capillaire ;
- des éléments actifs répartis en deux zones latérales sur lesquelles l'élément actif est de même nature et une zone centrale sur laquelle l'élément actif est de nature différente ;
- le tube capillaire porteur des éléments actifs subissant un recuit avant montage de l'élément chauffant.

Avantageusement, les éléments actifs du thermocouple sont du Bismuth pour les zones latérales et de l'Antimoine pour la zone centrale.

Ces dispositions permettent de réaliser un thermocouple déposé sur un tube capillaire, avec une grande précision de réalisation et de caractéristiques finales du thermocouple, et une excellente reproductibilité de fabrication.

Selon une mise en oeuvre particulière, l'élément chauffant pour thermocouple pour débitmètre massique, prend la forme d'un bobinage en fil en alliage Nickel (75%) Chrome (25%) d'un diamètre de quelques dizaines de microns.

Selon une autre mise en oeuvre, l'élément chauffant prend la forme d'un manchon en Cuivre sur lequel sont collées les résistances CMS.

Selon encore une autre mise en oeuvre, l'élément chauffant est déposé sur le tube par canon à électrons, le matériau de cet élément est un alliage Nickel Chrome, et la résistance, déposée sur la zone centrale du thermocouple, comporte une zone centrale et deux contacts à ses extrémités, et deux phases de dépôt successives sont réalisées avec des masques en Nickel adaptés aux géométries différentes de la résistance et des contacts.

Selon encore une autre mise en oeuvre, l'élément chauffant est constitué d'un des matériaux du thermocouple et l'effet de chauffage est obtenu par effet Joule en régime alternatif.

Ces dispositions correspondent à des variantes de réalisation, et permettent d'obtenir soit des dispositifs plus économiques à fabriquer, soit des dispositifs très précis, selon les besoins.

La description qui va suivre, faite en regard des dessins annexés dans un but explicatif permet de mieux comprendre les avantages, buts et caractéristiques de l'invention.

La figure 1 représente le schéma fonctionnel d'un débitmètre de technologie classique.

La figure 2 montre le principe de fonctionnement du capteur de débit classique.

La figure 3 est un schéma de la structure du thermocouple selon l'invention.

La figure 4 est un schéma d'une variante de structure du thermocouple selon l'invention.

La figure 5 est un schéma d'une autre variante du thermocouple selon l'invention.

La figure 6 est un schéma d'une autre variante du thermocouple selon l'invention.

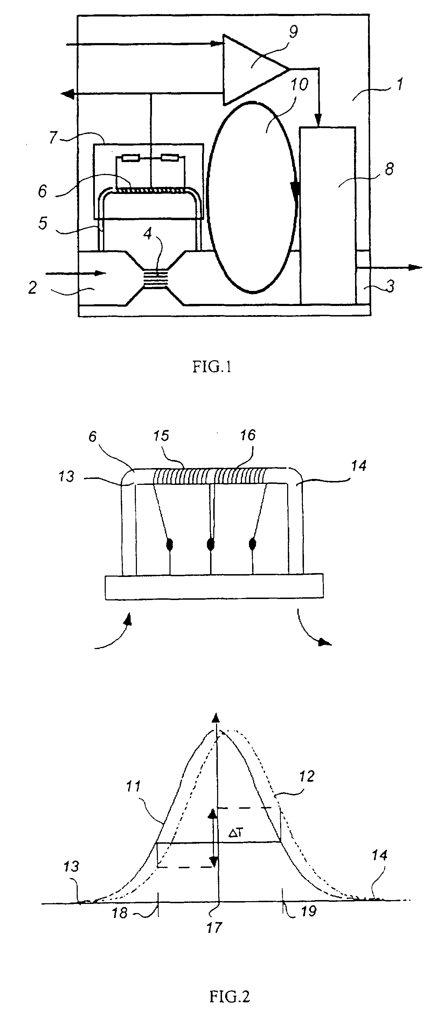

Tel que schématisé selon une disposition classique sur la figure 1, un débitmètre 1 est inséré sur une ligne de circulation de gaz, et comporte une entrée de gaz 2 et une sortie de gaz 3 (le sens de circulation du gaz est symbolisé par des flèches) Le circuit de gaz présente dans le débitmètre 1 une restriction laminaire 4 de la section du passage principal de gaz, avec en parallèle un passage de dérivation (bypass) 5 qui fait circuler une partie du flux gazeux dans un tube capillaire 6 dans le capteur 7.

Le débitmètre 1 comporte également une vanne 8 de contrôle du flux gazeux 2 qui régule le débit et un circuit électronique 9 qui est de type comparateur (P.I.D. c'est à dire Proportionnel Intégrateur Dérivateur) entre une consigne transmise de l'extérieur et la mesure réalisée par le capteur 7. Une boucle de contrôle 10 de type connu de l'homme de l'art réalise l'asservissement de fonctionnement du débitmètre 1.

En ce qui concerne son principe, le capteur 7 reçoit et chauffe une petite partie du débit laminaire (à pleine échelle 10 cm³/mn), qui est proportionnelle au débit total. Le débit massique est estimé à partir du transfert thermique qu'il engendre : le profil de température sans circulation de gaz 11 le long du tube capillaire 6 du capteur 7 chauffé sur une partie de sa longueur est modifié en un profil dissymétrique 12 lorsque du gaz circule dans le tube capillaire 6, et cette différence de température ΔT entre l'amont 13 et l'aval 14 du tube capillaire 6 est une mesure du débit massique.

Le capteur de débit, dans le dispositif classique non conforme à l'invention, comporte comme on le voit sur la figure 2 deux bobines 15, 16 de fil résistif, qui assurent deux fonctions simultanément : le chauffage et la mesure de la température.

Cette mesure de température est obtenue en mesurant la variation des deux résistances, montées de façon classique dans un pont de Wheatstone. L'application d'un courant constant entre les bornes des résistances qui sont choisies de valeur équivalente R (à même température) provoque le chauffage du tube capteur en deux endroits proches.

En l'absence de circulation de gaz dans le capillaire, la répartition de température est représentée par la courbe 11 sur la figure 2 (la courbe présente la valeur de la température en ordonnée, et la distance le long du tube en abscisse) et est naturellement symétrique par rapport au centre 17 des deux bobines 15, 16. Au contraire, dans le cas de circulation de gaz dans le tube (courbe 12), la répartition de température est asymétrique, et on observe entre deux points équidistants 18, 19 du centre 17 des bobines 15, 16 une différence de température ΔT, qui se traduit par des mesures de résistance différentes pour les deux éléments résistifs 15, 16, R-δR et R+δR.

Dans un capteur à thermocouple, le montage avec deux résistances en pont de Wheatstone est remplacé fonctionnellement par un thermocouple qui, comme on le sait, comprend deux matériaux différents, tels que une différence de température observée entre ces matériaux provoque l'apparition d'un courant électrique directement mesurable, ce qui se traduit par un montage plus simple que le schéma classique à deux résistances de mesure.

Dans un mode de réalisation préféré de l'invention, le couple Bi(n)-Sb(p) (Bismuth Antimoine) en technologie couche mince est utilisé. Le pouvoir thermoélectrique de ce couple, de l'ordre de 120 microV/°C, est atteint en optimisant les paramètres de dépôt : température de substrat, vitesse du dépôt, température (0-100°C) et durée du recuit.

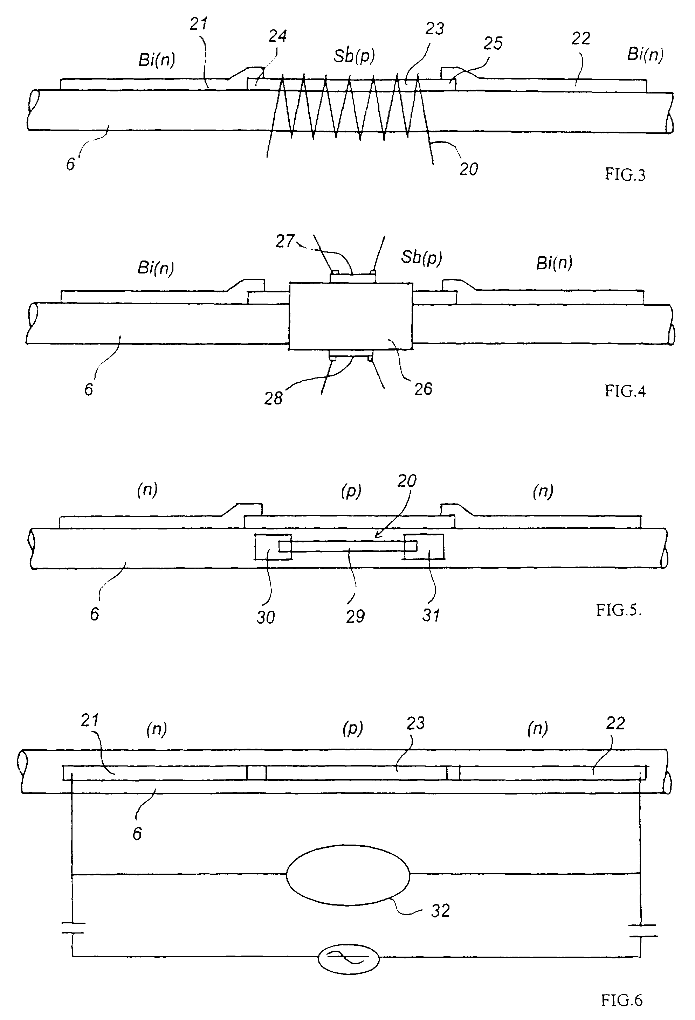

Divers modes de réalisation de thermocouples sont envisagés. Dans une réalisation préférée détaillée sur la figure 3, la structure est constituée d'un élément chauffant 20, un fil en alliage Nickel (75%) et Chrome (25%) qui a la particularité d'avoir une résistivité élevée (1,33 Ohm.mm2.m-1) et un faible coefficient de variation de la résistance en fonction de la température (10 ppm/°C) (son diamètre est de 28 microns et il est alimenté par un courant de 12,5 mA), et du thermocouple Bi(n)-Sb(p) comportant deux zones 21, 22 latérales de Bismuth entourant une zone centrale 23 en Antimoine.

Avant le dépôt des éléments actifs, une couche isolante de zircone (ZrO2), non représentée, est déposée sur le tube capillaire 6 de nature métallique. La zircone (ZrO2), choisie pour sa bonne stabilité et ses bonnes caractéristiques diélectriques, est déposée par canon à électrons sur le tube capillaire 6 du capteur, sur une épaisseur de 2,5 microns. Le substrat constitué par le tube capillaire 6 en acier inoxydable 316L, est maintenu sur un support chauffant non détaillé mais de type connu de l'homme de l'art. Il est préférable que le porte-substrat soit en rotation pendant le dépôt.

Le dépôt de la couche isolante se fait par ajout d'oxygène dans l'enceinte de dépôt. Les paramètres de dépôt au canon à électrons de zircone sur les tubes capillaires 6 sont alors les suivants : cible : ZrO2, épaisseur déposée : 2 à 3 microns, pression résiduelle : inférieure à 10⁻⁶ Torr, pression O2 : 8 10⁻⁵ Torr, température du substrat : 300 °C, vitesse de dépôt : 20 à 40 Angströms par seconde.

Les dépôts des composants en Bismuth 21, 22 et Antimoine 23 du thermocouple sont réalisés d'une façon connue de l'homme de l'art, avec typiquement un dépôt au canon à électrons, à travers des masques en nickel, à une pression résiduelle inférieure à 10⁻⁶ Torr, et sur une épaisseur de quelques microns. Comme on le voit sur la figure 3, les dépôts de Bismuth 21, 22 chevauchent les bords 24, 25 du dépôt central 23 en Antimoine (configuration NPN).

Le fil résistif constituant l'élément chauffant 20 est enroulé autour de la zone comportant le dépôt 23 d'Antimoine.

Le mode de fonctionnement du dispositif est identique au fonctionnement classique dans le cadre d'un débitmètre massique 1 à thermocouple pour circuit de fluide.

Dans une variante non représentée, le couple Bi2Te3(n)-Bi2Te3(p) (Tellurure de Bismuth) en technologie couches minces est utilisé en remplacement du couple Bi(n)-Sb(p).

La sensibilité atteinte est de l'ordre de 400 microV/°C sur un domaine de température de 0°C-150°C.

Dans une autre variante présentée figure 4, l'élément chauffant 20 est un manchon en Cuivre sur lequel sont collées des résistances 27, 28 de type CMS. Le manchon de Cuivre a pour fonction d'uniformiser la température sur une section du tube capillaire 6.

Dans encore une autre variante de structure, présentée figure 5, l'élément chauffant 20 est déposé sur le tube 6 par une méthode connue de l'homme de l'art, par exemple par canon à électrons ou par pulvérisation magnétron. Le matériau de cet élément est un alliage Nickel Chrome. La résistance, déposée sur la zone 23 en Antimoine du thermocouple, comporte une zone centrale 29 et deux contacts 30, 31 à ses extrémités. Dans le cas de dépôt par canon à électrons, deux phases de dépôt successives sont envisagées avec des masques en Nickel adaptés aux géométries différentes de la zone centrale 29 de la résistance et des contacts 30, 31.

Dans une troisième variante de structure, présentée figure 6, l'élément chauffant 20 est constitué d'un des matériaux du thermocouple. Il est alors chauffé par effet Joule en régime alternatif. En cours de fonctionnement du dispositif de mesure de débit massique, lorsque le gaz circule, la différence de température entre les deux jonctions du thermocouple est déterminée par un microvoltmètre 32 continu, de valeur d'impédance d'entrée élevée.

La portée de la présente invention ne se limite pas aux modes de réalisation présentés mais s'étend au contraire aux perfectionnements et modifications à la portée de l'homme de l'art.

## Revendications

1. Procédé de réalisation d'un capteur (7) à microthermocouple destiné à être incorporé dans un débitmètre massique (1) pour circuit de fluides gazeux, ledit capteur étant réalisé sur un tube capillaire métallique (6) **caractérisé en ce qu'**il comporte les étapes suivantes :
- le dépôt d'une couche isolante électriquement sur le tube capillaire ;
- puis le dépôt sur ladite couche isolante des éléments actifs du thermocouple répartis en deux zones latérales (21, 22) en un même matériau entourant une zone centrale (23) en un matériau de nature différente ;
- puis recuit du tube capillaire (6) ;
- montage d'un élément chauffant (20) sur le tube (6) ainsi traité.

2. Procédé selon la revendication 1 **caractérisé en ce que** les zones latérales (21, 22) sont réalisées par dépôt de Bismuth et que la zone centrale (23) est réalisée par dépôt d'Antimoine.

3. Procédé selon les revendications 1 et 2 **caractérisé en ce que** le dépôt des éléments actifs (21, 22, 23) du thermocouple est réalisé à une pression résiduelle inférieure à 10⁻⁶ Torr et sur une épaisseur de quelques microns.

4. Procédé selon la revendication 1 **caractérisé en ce que** le recuit du tube capillaire ayant reçu les éléments actifs du thermocouple (21, 22, 23) est réalisé pendant une durée de une heure.

5. Capteur (7) à microthermocouple obtenu selon la revendication 1 **caractérisé en ce qu'**il comprend ;
- une couche isolante sur le tube capillaire ;
- un élément chauffant (20);
- des éléments actifs répartis en deux zones latérales (21, 22) sur lesquelles l'élément actif est de même nature et une zone centrale (23) sur laquelle l'élément actif est de nature différente ;
- le tube capillaire porteur des éléments actifs subissant un recuit avant montage de l'élément chauffant (20).

6. Capteur à microthermocouple selon la revendication 5 **caractérisé en ce que** les éléments actifs du thermocouple sont du Bismuth pour les zones latérales (22) et de l'Antimoine pour la zone centrale.

7. Capteur à microthermocouple selon les revendications 5 et 6 **caractérisé en ce que** l'élément chauffant (20) pour capteur (7) a la forme d'un bobinage en fil en alliage Nickel (75%), Chrome (25%) d'un diamètre de quelques dizaines de microns sur la zone médiane (23) des éléments actifs du microthermocouple.

8. Capteur à microthermocouple selon les revendications 5 et 6 **caractérisé en ce que** l'élément chauffant prend la forme d'un manchon de Cuivre (26) sur lequel sont collées des résistances CMS (27, 28) ledit manchon étant sur la zone médiane.

9. Capteur à microthermocouple selon les revendications 5 et 6 **caractérisé en ce que** l'élément chauffant (20) est constitué d'un des matériaux du thermocouple et **en ce que** l'effet de chauffage est obtenu par effet Joule en régime alternatif.

10. Capteur à microthermocouple selon les revendications 5 et 6 **caractérisé en ce que** l'élément chauffant (20) est un alliage Nickel Chrome, déposé sur la zone centrale (23) du thermocouple, avec une zone centrale (29) et deux contacts (30), (31) d'extrémité.

## Patentansprüche

1. Verfahren für das Erstellen eines Fühlers (7) mit Mikrothermoelement für den Einbau in einem Massendurchsatzmeter (1) für Kreisläufe mit gasförmigen Fluiden, wobei der genannte Fühler auf einem Kapillarröhrchen aus Metall (6) erstellt wird, **gekennzeichnet dadurch, dass** es sich aus folgenden Schritten zusammensetzt:
- Aufbringen einer elektrischen Isolierschicht auf dem Kapillarröhrchen;
- anschließend Aufbringen auf der genannten Isolierschicht der aktiven Elemente des Thermoelements, aufgeteilt in zwei seitliche Bereiche (21,22) aus demselben Material, die einen zentralen Bereich (23) aus einem anderen Material umschließen;
- dann Glühen des Kapillarröhrchens (6);
- Montage eines Heizelements (20) auf dem so behandelten Rohr.

2. Verfahren nach Anspruch 1 **gekennzeichnet dadurch, dass** die seitlichen Bereiche (21,22) durch das Aufbringen von Wismut und der zentrale Bereich durch das Aufbringen von Antimon erstellt werden.

3. Verfahren nach den Ansprüchen 1 und 2 **gekennzeichnet dadurch, dass** das Aufbringen der aktiven Elemente (21, 22, 23) des Thermoelements bei einem zurückbleibenden Druck unter 10 ⁺⁶ Torr und auf einer Dicke von einigen Mikron erfolgt.

4. Verfahren nach Anspruch 1 **gekennzeichnet dadurch, dass** das Glühen des Kapillarröhrchens, das mit den aktiven Elementen des Thermoelements (21, 22, 23) versehen wurde, während einer Stunde durchgeführt wird.

5. Fühler (7) mit Mikrothermoelement erstellt nach Anspruch 1 **gekennzeichnet dadurch, dass** er aus folgenden Elementen besteht:
- eine Isolierschicht auf dem Kapillarröhrchen;
- ein Heizelement (20);
- aktive Elemente aufgeteilt in zwei seitliche Bereiche (21, 22) auf denen das aktive Element dasselbe ist und in einen zentralen Bereich (23), auf dem das aktive Element ein anderes ist;
- das die aktiven Elemente tragende Kapillarröhrchen, das vor der Montage des Heizelements (20) geglüht wird.

6. Fühler mit Mikrothermoelement nach Anspruch 5 **gekennzeichnet dadurch, dass** die aktiven Elemente des Thermoelements auf den seitlichen Bereichen (22) aus Wismut und im zentralen Bereich aus Antimon sind.

7. Fühler mit Mikrothermoelement nach den Ansprüchen 5 und 6 **gekennzeichnet dadurch, dass** das Heizelement (20) für den Fühler (7) eine Spule für Kabel aus der Legierung Nickel (75%) und Chrom (25%) ist, die auf dem mittleren Bereich (23) der aktiven Elemente des Thermoelements einen Durchmesser von einigen Zehnern Mikrons hat.

8. Fühler mit Mikrothermoelement nach den Ansprüchen 5 und 6 **gekennzeichnet dadurch, dass** das Heizelement ein Überschiebrohr aus Kupfer (26) ist, auf das die CMS-Widerstände (27, 28) geklebt sind, wobei sich das genannte Überschiebrohr im mittleren Bereich befindet.

9. Fühler mit Mikrothermoelement nach den Ansprüchen 5 und 6 **gekennzeichnet dadurch, dass** das Heizelement (20) aus einem der Materialien des Thermoelements besteht und dadurch dass die Heizwirkung durch Joule-Effekt bei Wechselstrom erzielt wird.

10. Fühler mit Mikrothermoelement nach den Ansprüchen 5 und 6 **gekennzeichnet dadurch, dass** das Heizelement (20) eine Legierung aus Nickel und Chrom ist, die im zentralen Bereich (23) des Thermoelements aufgebracht wird, mit einem zentralen Bereich (29) und zwei Kontakten (30, 31) an den Enden.

## Claims

1. Process for producing a microthermocouple sensor (7) for incorporating in a mass flow meter (1) for a gaseous fluid circuit, said sensor being produced on a metallic capillary tube (6), **characterised in that** it comprises the following stages:
- electrically depositing an insulating layer on the capillary tube;
- then depositing on said insulating layer active thermocouple elements distributed in two lateral zones (21, 22) made of the same material surrounding a central zone (23) made of a material of a different type;
- then annealing the capillary tube (6) ;
- fitting a heating element (20) on the tube (6) treated in this manner.

2. Process according to claim 1, **characterised in that** the lateral zones (21, 22) are produced by depositing bismuth and the central zone (23) is produced by depositing antimony.

3. Process according to claims 1 and 2, **characterised in that** depositing of active thermocouple elements (21, 22, 23) is produced at a residual pressure lower than 10⁻⁶ torr and over a thickness of several microns.

4. Process according to claim 1, **characterised in that** annealing of the capillary tube, having received the active thermocouple elements (21, 22, 23), is produced for the duration of one hour.

5. Microthermocouple sensor (7) obtained according to claim 1, **characterised in that** it comprises:
- an insulating layer on the capillary tube;
- a heating element (20);
- active elements distributed in two lateral zones (21, 22) on which the active element is of the same type and a central zone (23) on which the active element is of a different type;
- the capillary tube bearing the active elements undergoing annealing before the heating element (20) is fitted.

6. Microthermocouple sensor according to claim 5, **characterised in that** the active thermocouple elements are bismuth for the lateral zones (22) and antimony for the central zone.

7. Microthermocouple sensor according to claims 5 and 6, **characterised in that** the heating element (20) for the sensor (7) has the form of a wire winding in nickel alloy (75%), and chrome alloy (25%) with a diameter of several dozen microns in the median zone (23) of the active microthermocouple elements.

8. Microthermocouple sensor according to claims 5 and 6, **characterised in that** the heating element takes the form of a copper sleeve (26) on which SMD resistors (27, 28) are stuck, said sleeve being on the median zone.

9. Microthermocouple sensor according to claims 5 and 6, **characterised in that** the heating element (20) is produced from one of the thermocouple materials and **in that** the heating effect is obtained by the Joule effect in alternating operation.

10. Microthermocouple sensor according to claims 5 and 6, **characterised in that** the heating element (20) is a nickel chrome alloy disposed on the central zone (23) of the thermocouple, with a central zone (29) and two end contacts (30, 31).
